Europäisches Patentamt

European Patent Office

Office européen des brevets

(11) Numéro de publication: **0 289 437**
**A2**

## DEMANDE DE BREVET EUROPEEN

(21) Numéro de dépôt: 88420139.3

(22) Date de dépôt: 28.04.88

(51) Int. Cl.⁴: **B 21 D 53/86**
**B 62 K 19/18**

(30) Priorité: 28.04.87 FR 8706346

(43) Date de publication de la demande:
02.11.88 Bulletin 88/44

(84) Etats contractants désignés:
AT BE CH DE ES FR GB GR IT LI LU NL SE

(71) Demandeur: **Levet, Guy**
**La Pinchignere Eculieu**
**F-42480 La Fouillouse (FR)**

(72) Inventeur: **Levet, Guy**
**La Pinchignere Eculieu**
**F-42480 La Fouillouse (FR)**

(74) Mandataire: **Dupuis, François**
**Cabinet Charras 3 Place de l'Hôtel-de-Ville BP 203**
**F-42005 St. Etienne Cédex 1 (FR)**

(54) Procédé d'assemblage d'au moins deux bords en regard d'une tôle notamment pour la réalisation par emboutissage d'une tête de fourche de bicyclette et la tête de fourche obtenue par la mise en oeuvre du procédé.

(57) Procédé d'assemblage d'au moins deux bords en regard d'une tôle notamment pour la réalisation par emboutissage d'une tête de fourche de bicyclette et la tête de fourche obtenue par la mise en oeuvre du procédé.

Ce procédé est remarquable en ce qu'on exécute, sur chacun des bords opposés de la tôle, des empreintes complémentaires en creux et en relief conformées pour constituer, après emboutissage et mise en forme de la tôle, un système de verrouillage en position jointive desdits bords.

FIG.1

EP 0 289 437 A2

## Description

Procédé d'assemblage d'au moins deux bords en regard d'une tôle notamment pour la réalisation par emboutissage d'une tête de fourche de bicyclette et la tête de fourche obtenue par la mise en oeuvre du procédé.

L'objet de l'invention se rattache au secteur technique des accessoires pour cycles.

On connaît des têtes de fourches pour cycles obtenues à partir d'une tôle emboutie. Cette tôle présente différentes découpes pour le positionnement et la fixation ultérieure des fourreaux et du tube de direction. Après emboutissage de la tôle par tout moyen connu et approprié en fonction de la forme et du profil désirés de la tête de fourche, les bords, situés entre les découpes sont disposés deux à deux en regard, d'une manière jointive.

Cependant, on conçoit que lorsque les fourreaux sont emmanchés dans les découpes correspondantes pour y être brasés, les bords en regard ont tendance à s'écarter. Pour éviter ce phénomène naturel d'écartement, on soude les bords, généralement avant la fixation des fourreaux.

On conçoit donc que cela constitue une opération supplémentaire qui augmente le coût de production. En outre, le bourrelet de soudure réalisé, s'avère inesthétique. Enfin, cette opération de soudure est relativement délicate et demande une certaine habileté pour avoir la qualité requise à un bon assemblage.

Le problème étant ainsi posé, l'invention s'est fixée pour but, d'une manière simple, efficace et rationnelle, de remédier à ces inconvénients en supprimant cette opération de soudure.

A cet effet, les bords opposés de la tôle situés entre la découpe centrale et chacune des découpes latérales, présentent, deux à deux, des empreintes complémentaires en creux et en relief, conformées pour constituer, en combinaison, sous l'effet de l'emboutissage de la tôle, un système de verrouillage en position jointive desdits bords.

L'invention est posée ci-après plus en détail à l'aide des dessins qui représentent seulement un mode d'exécution.

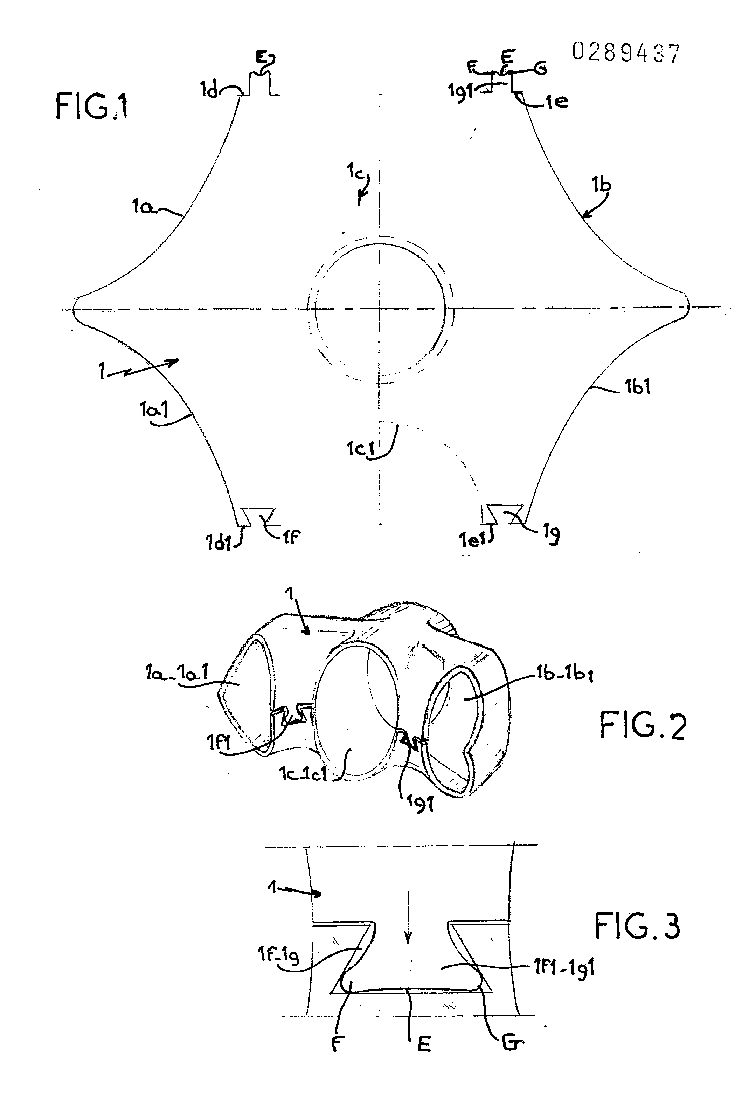

La figure 1 est une vue en plan de la tôle avant emboutissage pour la formation de la tête de fourche.

La figure 2 est une vue en perspective de la tête de fourche.

La figure 3 est, à une échelle plus importante, une vue de dessous montrant le procédé d'assemblage.

Afin de rendre plus concret l'object de l'invention, on le décrit maintenant d'une manière non limitative en se référant aux exemples de réalisation des figures des dessins.

La tête de fourche est obtenue à partir d'une tôle emboutie (1) en toute matière appropriée, notamment en acier. D'une manière connue, la tôle (1) présente symétriquement à son axe médian, des découpes d'extrémités (1a - 1a1) et (1b - 1b1) pour le logement des fourreaux, et une découpe centrale (1c -1c1) pour le tube de direction. Entre chacune des séries de découpes (1a et 1c) - (1a1 et 1c1) et (1c et 1b) - (1c1 et 1b1), subsistent des bords opposés rectilignes respectivement (1d - 1d1) et (1e - 1e1).

Après emboutissage de la tôle pour la formation de la tête de fourche par tout moyen connu et approprié, les bords (1d - 1d1) et (1e - 1e1) sont disposés en regard, d'une manière sensiblement jointive.

Selon l'invention, sur chacun des bords opposés (1d - 1d1) et (1e - 1e1), sont formées des empreintes complémentaires en creux et en relief pour assurer en combinaison, après emboutissage de la plaque et mise en pression desdits bords, leur auto-assemblage en position jointive. Les empreintes en creux (1f) et (1g) ont une forme en queue d'aronde, en totalité ou en partie. Les empreintes en relief (1f1 et 1g1) constituent une patte dont le côté transversal d'extrémité présente une échan-crure médiane (E) délimitant deux prohéminences d'extrémités (F) et (G).

Compte tenu de cette conformation particulière des pattes (1f1) et (1g1), il en résulte que lors de l'opération d'em-boutissage et de mise en pression des bords rectilignes, les prohéminences (F) et (G) des pattes (1f1 et 1g1) viennent en appui dans le fond des empreintes correspondantes en queue d'aronde (1f) et (1g) et concomitamment s'écartent sous l'effet de pression en relation avec l'échan-crure, de sorte que lesdites pattes (1f1) et (1g1) garnissent en totalité, l'empreinte en queue d'aronde. On obtient donc un assemblage sûr et efficace, interdisant tout risque d'écartement des bords en regard lors de l'emmanchement des fourreaux.

Il est bien évident que ce mode d'assemblage peut être appliqué à d'autres éléments que les têtes de fourches et plus particulièrement à toute pièce dont certaines parties, disposées en regard, doivent être verrouillées en position.

De même, les empreintes en creux et en relief du système de verrouillage, peuvent présenter tous profils, susceptibles d'être déformés lors de l'opération d'emboutissage, de sorte que le profil de l'empreinte en relief, sous l'effet de déformation du métal, garnit l'empreinte en creux.

## Revendications

-1- Procédé d'assemblage d'au moins deux bords en regard d'une tôle emboutie, caractérisé en ce qu'on exécute, sur chacun des bords opposés de la tôle, des empreintes complémentaires en creux et en relief conformées pour constituer, après emboutissage et mise en forme de la tôle, un système de verrouillage en position jointive desdits bords.

-2- Tête de fourche réalisée en tôle emboutie selon le procédé de la revendication 1 et comprenant une découpe centrale pour le tube de direction et des découpes latérales pour les fourreaux, caractérisée en ce que les bords opposés de la tête (1) situés entre la découpe centrale et chacune des découpes latérales, présentent deux à deux, des empreintes complémentaires en creux (1f - 1g) et en relief (1f1 - 1g1) conformées pour constituer, en combinaison, sous l'effet de l'emboutissage de la tôle, un système de verrouillage en position jointive desdits bords.

-3- Tête de fourche selon la revendication 2, caractérisée en ce que les empreintes en relief (1f1 et 1g1) constituent une patte débordante dont le bord transversal d'extrémité présente des agencements conformés pour être écartés en position de butées dans les empreintes correspondantes en creux, sous l'effet de pression résultant de l'opération d'emboutissage en vue de garnir le profil desdites empreintes en creux.

-4- Tête de fourche selon la revendication 3, caractérisée en ce que les agencements des pattes (1f1 - 1g1) sont constitués par une échancrure médiane (E) qui délimite deux prohéminences d'extrémités (F) et (G).

-5- Tête de foruche selon l'une quelconque des revendications 2 et 3, caractérisée en ce que les empreintes en creux (1f - 1g) sont profilées, en totalité ou en partie, en queue d'aronde.

FIG.1

FIG.2

FIG.3

0289437